# EUROPÄISCHE PATENTSCHRIFT

(11) **EP 1 346 625 B1**
(45) Veröffentlichungstag und Bekanntmachung des Hinweises auf die Patenterteilung: **28.02.2007**
(21) Anmeldenummer: 03100404.7
(22) Anmeldetag: 20.02.2003
(51) Int. Cl.: A01D 41/16, A01B 59/06

(54) **Einrichtung zur Anbringung eines Erntevorsatzes an einem Mähdrescher**
Device for attaching a header to a combine
Dispositif pour attacher un dispositif de récolte à une moissonneuse batteuse

(30) Priorität: 18.03.2002 US 100384
(43) Veröffentlichungstag der Anmeldung: 24.09.2003
(73) Patentinhaber: DEERE & COMPANY, Moline, Illinois 61265-8098 (US)
(72) Erfinder: Watts, Bradley James, Eldridge, IA 52748, (US); Becker, Klaus Ernst, East Moline, IL 61244 (US); Bowers, Scott Robert, Geneseo, IL 61254 (US); Benhart, Michael Dwain, Rock Island, IL 61201 (US); Sheedy, Ronald Leo, Eldridge, IA 52748 (US); Moreland, Keith Allan, Aledo, IL 61231 (US); Emmert, Walter, Contwig, 66497 (DE)
(74) Vertreter: Holst, Sönke

(56) Entgegenhaltungen:
- EP-A- 0 676 123
- EP-A- 1 290 935
- DE-A- 4 008 736
- FR-A- 2 687 115
- FR-A- 2 745 043

## Beschreibung

Die Erfindung betrifft eine Kombination aus einem Mähdrescher, einem Erntevorsatz sowie einer Einrichtung zur Anbringung des Erntevorsatzes an dem Mähdrescher nach dem Oberbegriff des Anspruchs 1.

Mähdrescher werden in der Landwirtschaft genutzt, um an ihrer Vorderseite Pflanzen aufzunehmen und sie dann nach hinten in den Körper zur weiteren Verarbeitung zu fördern. Diese Mähdrescher sind mit einem Erntevorsatz ausgestattet, der an der Vorderseite des Mähdreschers anbringbar ist. Zur Ernte unterschiedlicher Pflanzenarten können verschiedene Erntevorsätze an der Vorderseite des Mähdreschers angebracht werden. Beispielsweise kann ein als Schneidwerk bekannter Erntevorsatz an der Vorderseite des Mähdreschers angebracht werden, um Weizen zu ernten. Ein als Maispflücker bekannter Erntevorsatz kann zur Maisernte angebracht werden.

Es ist bekannt, Verriegelungsmechanismen vorzusehen, die dazu dienen, die Erntevorsätze an der Vorderseite der Mähdrescher anzubringen oder zu fixieren. Die Verriegelungsmechanismen umfassen in der Regel verschiebbare, am Mähdrescher angebrachte Stifte, die nach außen verschoben werden, um in Löcher im Erntevorsatz einzugreifen. Die Stifte befestigen mit den Löchern den Erntevorsatz am Mähdrescher. Bei einigen Mähdreschertypen muss der Bediener jeden Stift einzeln verriegeln, indem er zu jeder Seite des Mähdreschers gehen und jeden Stift mit einer getrennten Bewegung verschieben muss. Andere Typen von Mähdreschern stellen einen Verriegelungsmechanismus bereit, die es einem Bediener ermöglichen, die Stifte gleichzeitig herauszuziehen, indem er an einem Gestänge angreift, während er an einer Seite des Fahrzeugs steht. Andere Mähdrescher stellen andere Systeme bereit, die keine Stifte zum Festlegen oder Verriegeln des Erntevorsatzes am Mähdrescher beim Erntebetrieb verwenden.

Viele Erntevorsätze umfassen Einrichtungen, die durch ein hydraulisches System an Bord des Mähdreschers angetrieben werden. Hydraulische Leitungen erstrecken sich von dem hydraulischen System des Mähdreschers nach vorn. Hydraulische Leitungen am Erntevorsatz müssen mit den geeigneten hydraulischen Leitungen am Mähdrescher verbunden werden, so dass der Erntevorsatz mit dem hydraulischen System des Mähdreschers verbunden ist und durch es angetrieben wird. Einige Mähdrescher erfordern, dass mehrere hydraulische Leitungen vom Mähdrescher durch den Bediener von Hand an die jeweiligen hydraulischen Leitungen am Erntevorsatz angebracht werden. Andere Mähdrescher stellen Mehrfach- oder Gruppenkuppler bereit, die dazu dienen, mehrere hydraulische Leitungen vom Mähdrescher mit der Vielzahl entsprechender hydraulischer Leitungen am Erntevorsatz zu verbinden. Das vermindert die Zeit, die der Bediener benötigt, die verschiedenen hydraulischen Leitungen anzuschließen, da sie alle in einem einzigen Vorgang angeschlossen werden, wenn die beiden Hälften der Mehrfachkupplung aneinander befestigt werden.

Manche Mähdrescher stellen auch elektrische Leistung für die Erntevorsätze bereit, damit letztere bestimmte Funktionen durchführen können, wie den Betrieb von Richtungssignalen oder Warnlichten auf dem Erntevorsatz. Bei manchen Mähdreschern muss der Bediener die elektrischen Leitungen und dann die hydraulischen Leitungen von Hand anbringen. Andere Mähdrescher stellen Mehrfachkuppler bereit, die zwei Hälften aufweisen, in welche sich die Enden der elektrischen Leitungen vom Erntevorsatz und vom Mähdrescher erstrecken. Wenn die beiden Hälften der Mehrfachkuppler zusammengebracht werden, werden die elektrischen Leitungen in richtiger Weise miteinander verbunden. Diese Mehrfachkuppler dienen dazu, die elektrischen Leitungen gleichzeitig mit der Verbindung der hydraulischen Leitungen miteinander zu verbinden, wenn die beiden Hälften der Mehrfachkuppler aneinander befestigt werden.

Der Vorgang eines Wechsels der Erntevorsätze umfasst die Schritte des Abnehmens der hydraulischen und elektrischen Leitungen, des Entriegelns der Verriegelungsmechanik und der physischen Trennung des Erntevorsatzes vom Mähdrescher. Der Bediener muss dann einen anderen Erntevorsatz physisch an den Mähdrescher anbringen, den Verriegelungsmechanismus in Eingriff bringen und dann die hydraulischen und elektrischen Leitungen anbringen. Derselbe Vorgang ist nötig, wenn ein Erntevorsatz zum Transport auf einem Wagen abgelegt und nach dem Transport zu einem anderen Feld wieder am Mähdrescher angebracht werden soll.

Die DE 21 11 227 A beschreibt einen Mähdrescher, dessen Erntevorsatz mittels eines hydraulisch betriebenen Mechanismus mit dem Schrägförderer des Mähdreschers verriegelt werden kann. Derselbe Mechanismus verriegelt auch an der Schnittstelle zwischen dem Schrägförderer und dem Erntevorsatz angeordnete, trennbare Leitungskupplungen zur Versorgung des Erntevorsatzes mit Hydraulikflüssigkeit. Durch die hydraulische Betätigung wird die Verriegelung relativ aufwändig und ist in der Praxis nicht anzutreffen.

In der nach dem Prioritätstag des vorliegenden Schutzrechts veröffentlichten EP 1 290 935 A wird eine manuell betätigbare Verriegelung zum Arretieren von zum Erntevorsatz führenden Leitungen am Schrägförderer beschrieben, die den Erntevorsatz auch mechanisch am Schrägförderer befestigt.

Das der Erfindung zu Grunde liegende Problem wird darin gesehen, einen Mechanismus bereitzustellen, die das Anbringen und Abnehmen des Erntevorsatzes für den Bediener vereinfacht, und der die Zeit, die der Bediener dafür benötigt, verkürzt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung schlägt einen Mähdrescher mit einer Einrichtung zur Anbringung eines Erntevorsatzes am Mähdrescher vor. Eine Mehrfachkupplung ist bereitgestellt, die in einer Verbindungsposition Leitungen des Mähdreschers, insbesondere hydraulische und/oder elektrische Leitungen, betriebsmäßig mit Leitungen des Erntevorsatzes verbindet, und in einer Trennungsposition diese Leitungen voneinander trennt, damit der Erntevorsatz vom Mähdrescher abgenommen werden kann. Ein manuell betätigbarer Verriegelungsmechanismus ist bereitgestellt, der den Erntevorsatz mechanisch mit dem Mähdrescher koppelt, d. h. ihn daran verriegelt, damit er beim Erntebetrieb nicht vom Mähdrescher abfallen kann. Der Verriegelungsmechanismus steht mit der Mehrfachkupplung in Betriebsverbindung, so dass er sich zwangsweise zwischen einer Verriegelungsposition und einer Entriegelungsposition bewegt, wenn die Mehrfachkupplung zwischen der Verbindungs- und der Trennungsposition bewegt wird.

Auf diese Weise wird durch eine Bewegung der Mehrfachkupplung auch der Verriegelungsmechanismus betätigt, bzw. umgekehrt, so dass das Abnehmen und Anbringen des Erntevorsatzes vereinfacht und beschleunigt sind.

Die Mehrfachkupplung umfasst zwei Hälften, die miteinander verbunden werden, wenn der Bediener einen Hebel verschwenkt. Ein Zug und Druck übertragendes Kabel, oder ein anderer geeigneter Mechanismus, wie ein Gestänge oder ein oder mehrere Seilzüge, erstreckt sich zwischen dem Verriegelungsmechanismus und dem Hebel, um den Verriegelungsmechanismus zwischen der Verriegelungsposition und der Entriegelungsposition zu bewegen, wenn der Hebel verschwenkt wird, um die Mehrfachkupplung zwischen der Verbindungsposition und der Trennungsposition zu bewegen.

In den Zeichnungen ist ein nachfolgend näher beschriebenes Ausführungsbeispiel der Erfindung dargestellt. Es zeigt:
- Fig. 1: eine Seitenansicht eines Mähdreschers mit einem Schrägförderer und einem an der Vorderseite des Mähdreschers anbrachten Erntevorsatz, mit einer erfindungsgemäßen Multifunktionsverriegelung,
- Fig. 2: eine perspektivische Teilansicht des vorderen Endabschnitts des Schrägförderers aus Figur 1, in der eine erfindungsgemäße Multifunktionsverriegelung gezeigt wird,

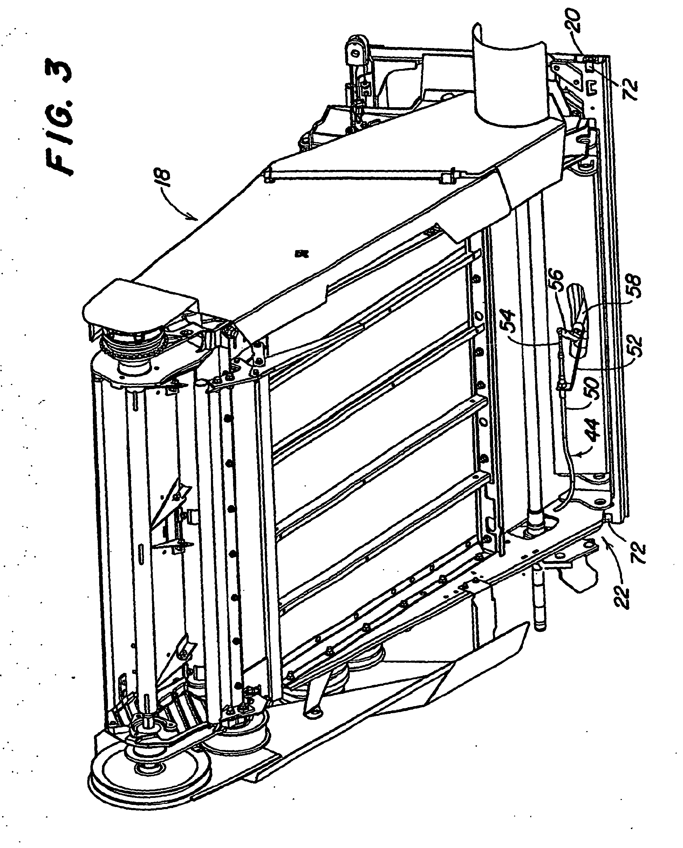

- Fig. 3: eine betrachtete perspektivische Teilansicht des Schrägförderers der Figuren 1 und 2, die von einer Position seitlich des und hinter dem Schrägförderer aufgenommen ist und in der der untere Endabschnitt eines Zug und Druck übertragenden Kabels des Verriegelungsmechanismus gezeigt wird,
- Fig. 4: eine darstellende Ansicht des Mehrfachkupplers, an den das Zug und Druck übertragende Kabel entsprechend der Erfindung angekoppelt ist.

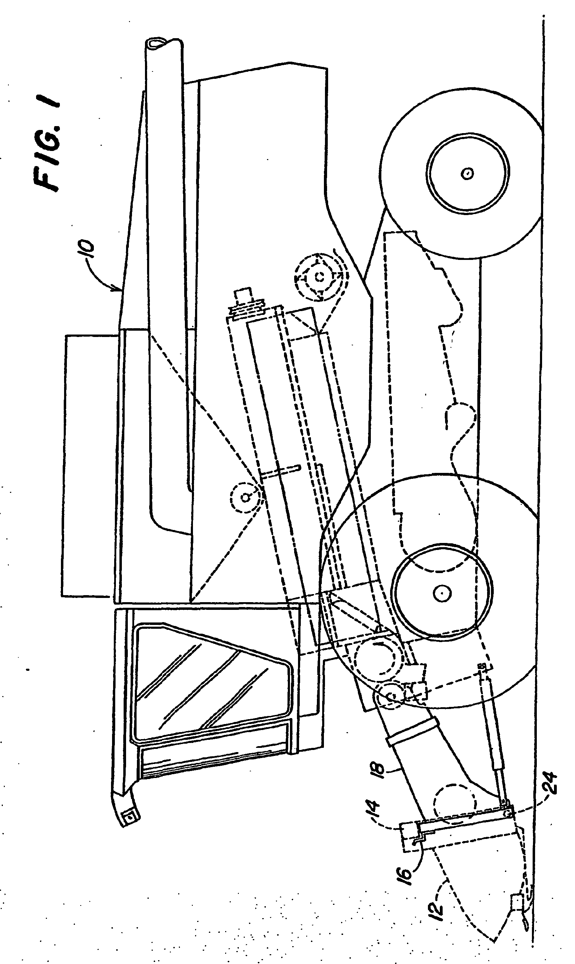

Es wird nun Bezug auf die Figur 1 genommen, in der eine darstellende Ansicht eines Mähdreschers 10 mit einem an der Vorderseite des Mähdreschers 10 angebrachten Erntevorsatz 12 gezeigt wird. Ein Träger 14 an dem oberen rückwärtigen Abschnitt des Erntevorsatzes 12 wird durch ein Paar von Halterungselementen 16 abgestützt, die an dem oberen Vorderbereich des vom Mähdrescher 10 gehalterten Schrägförderers 18 angebracht sind. Wie weiter unten detaillierter beschrieben, werden Stifte 20 eines Verriegelungsmechanismus 22 am unteren Vorderbereich des Schrägförderers gehaltert. Sie befinden sich im Eingriff mit Öffnungen 24, die im Erntevorsatz 12 vorgesehen sind. Die Stifte 20 innerhalb der Öffnungen 24 und der Träger 14 im Eingriff mit den Halterungselementen 16 des Schrägförderers 18 (und der Oberseite des Vorderbereichs des Schrägförderers 18) dienen dazu, den Erntevorsatz 12 im Betrieb in der richtigen Position gegenüber der Vorderseite des Schrägförderers 18 festzuhalten.

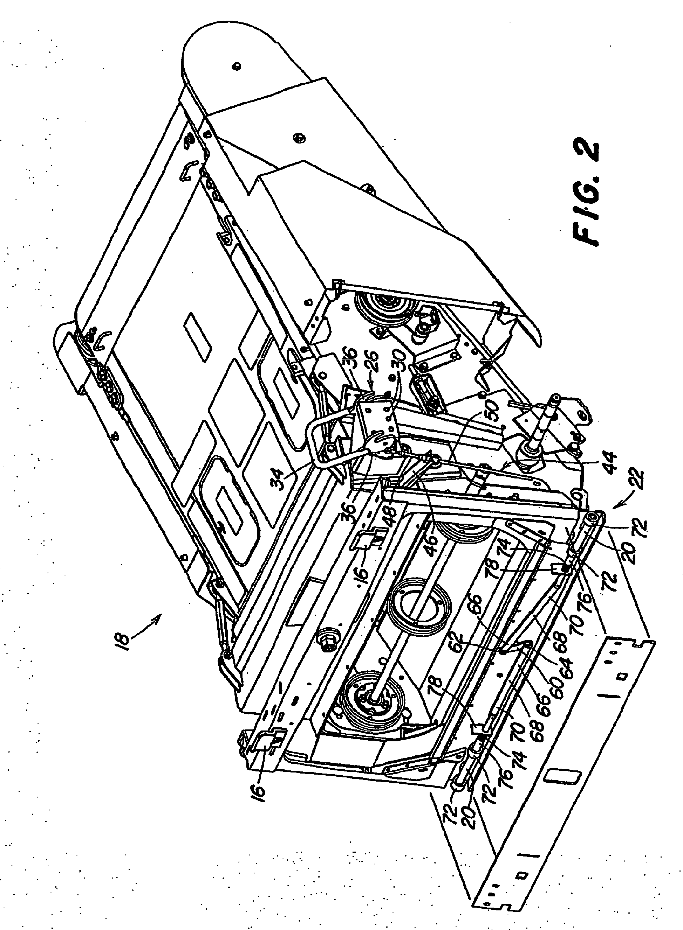

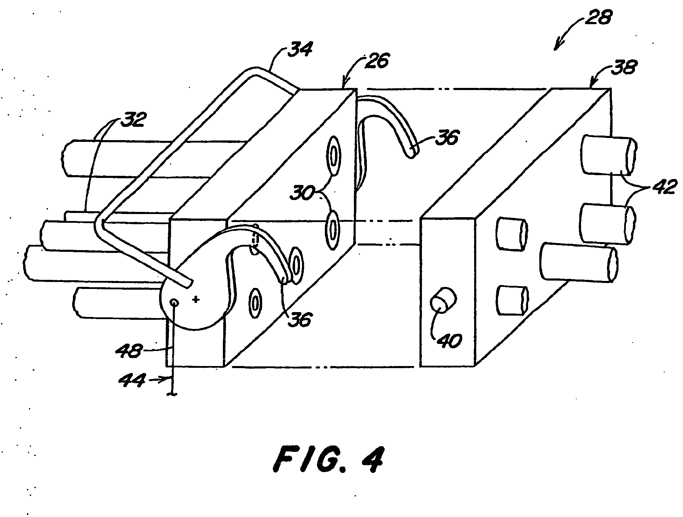

Es wird nun auf die Figur 2 Bezug genommen, in der eine Teilansicht des Vorderabschnitts des Schrägförderers 18 gezeigt ist. Eine mähdrescherseitige Hälfte 26 eines Mehrfachkupplers 28 ist an der Seite des Schrägförderers 18 angebracht. Die mähdrescherseitige Hälfte 26 des Mehrfachkupplers 28 umfasst verschiedene Anschlüsse 30, in die sich hydraulische Leitungen 32 vom Mähdrescher 10 von der Rückseite des Mehrfachkupplers 28 her erstrecken. Die mähdrescherseitige Hälfte 26 des Mehrfachkupplers 28 umfasst, wie am Besten anhand der Figuren 2 und 4 erkennbar ist, einen schwenkbaren Hebel 34, an dem ein Paar an Hakenelementen 36 befestigt sind, die mit dem Hebel 34 verschwenken. Wenn ein Bediener eine erntevorsatzseitige Hälfte 38 der Mehrfachkupplung 28 an der mähdrescherseitigen Hälfte 26 der Mehrfachkupplung 28 positioniert, kann der Bediener den Hebel 34 nach unten verschwenken, was dazu führt, dass die Hakenelemente 36 mit entsprechenden Dornen 40 in Eingriff geraten, welche an den Seiten der erntevorsatzseitigen Hälfte 38 der Mehrfachkupplung 28 angeordnet sind. Bei einem ganz nach unten verschobenen Hebel 34 dienen die Hakenelemente 36 dazu, die erntevorsatzseitige Hälfte 38 fest gegen die mähdrescherseitige Hälfte 26 der Mehrfachkupplung 28 zu ziehen, um auf diese Weise hydraulische Leitungen 32 vom Mähdrescher 10 mit den hydraulischen Leitungen 42 am Erntevorsatz 12 zu verbinden, wie auch elektrische Leitungen vom Mähdrescher 10 mit elektrischen Leitungen vom Erntevorsatz 12.

In betriebsmäßiger Verbindung mit dem Hebel 34 ist ein Zug und Druck übertragendes Kabel 44, das ein Teil des Verriegelungsmechanismus 22 bildet. Ein erstes Halterungselement 46 stützt den oberen Endabschnitt 48 des Äußeren oder der Umhüllung 50 des Zug und Druck übertragenden Kabels 44 starr ab. Das Kabel 44 erstreckt sich vom ersten Trägerelement 46 nach unten in das Innere des Schrägförderers 18. Ein zweites Halterungselement 52 stützt den unteren Endabschnitt 54 der Umhüllung 50 des Kabels 44 starr ab. Das untere Ende 54 des Kabels 44 ist an einem Arm 56 angebracht, der mit einem hinteren Endabschnitt einer Welle 58 verbunden ist. Die Welle 58 erstreckt sich von dort aus nach vorn und weist einen vorderen Endabschnitt auf, der mit einem schwenkbaren Element 60 verbunden ist. Das schwenkbare Element 60 umfasst untere und obere Enden 62 und 64, mit denen innere Enden 66 von Verbindungselementen 68 gekuppelt sind. Die äußeren Enden 70 der Verbindungselemente 68 stehen jeweils mit linken und rechten Stiften 20 in Verbindung. Die Stifte 20 sind innerhalb von Hülsenelementen 72 gelagert. Federn 74 sind zwischen einer Schulter 76 jedes Stifts 20 und einem Anlageelement 78 zusammengedrückt, welches am Rahmen des Schrägförderers 18 befestigt ist. Die zusammengedrückten Federn 74 dienen dazu, die Stifte 20 nach außen vorzuspannen.

Im Folgenden wird die Arbeitsweise der vorliegenden Erfindung detaillierter beschrieben. Um einen Erntevorsatz 12 am vorderen Ende des Schrägförderers 18 des Mähdreschers 10 anzubringen, wird der Bediener den Mähdrescher 10 in eine Position direkt hinter dem anzubringenden Erntevorsatz 12 fahren. Durch eine Betätigung von Steuerelementen innerhalb der Kabine des Mähdreschers 10 wird der Bediener dann die Position des Schrägförderers 18 derart verändern, dass die Halterungselemente 16 an dem Träger 14 an der Oberseite des Erntevorsatzes 12 in Anlage kommen. Der Bediener wird dann Steuerelemente in der Kabine des Mähdreschers 10 betätigen, um das vordere Ende des Schrägförderers 18 anzuheben, wobei der Erntevorsatz 12 angehoben wird, was bedingt, dass sich die Stifte 20 mit den zugehörigen Öffnungen 24 im Erntevorsatz 12 ausrichten. Der Bediener verlässt dann die Kabine und geht zur linken Seite des Schrägförderers 18. Er ergreift dann die erntevorsatzseitige Hälfte 38 der Mehrfachkupplung 28, die vom Erntevorsatz 12 lose herabhängt, und platziert sie an der mähdrescherseitigen Hälfte 26 der Mehrfachkupplung 26. Der Bediener zieht dann den Hebel 34 zu sich hin, was die Haken 38 um die Dorne 40 schiebt, so dass die beiden Hälften 26 und 38 der Mehrfachkupplung 28 aufeinander zu gezogen und die beiden Hälften 26 und 38 aneinander festgelegt werden. Schnellkupplungen an den Enden der hydraulischen Leitungen 32, 42 geraten miteinander in Eingriff, wenn die beiden Hälften 26 und 38 der Mehrfachkupplung aneinander befestigt werden, wodurch die Leitungen 32 des Mähdreschers 10 mit den jeweils zugeordneten Leitungen 42 des Erntevorsatzes 12 hydraulisch gekoppelt werden. Elektrische Leitungen, deren Enden durch die beiden Hälften 26, 38 der Mehrfachkupplung 28 gehalten werden, werden ebenfalls zusammengebracht, so dass die elektrischen Leitungen vom Mähdrescher 10 elektrisch mit den jeweils zugeordneten Leitungen am Erntevorsatz 12 verbunden werden.

Wenn der Bediener den Hebel 34 zu sich hinzieht, während er an der linken Seite des Schrägförderers 18 in der Nähe des Mähdreschers 10 steht, wird das Kabel 44 innerhalb seiner Umhüllung 50 nach oben gezogen. Das bedingt, dass das untere Ende 54 des Kabels 44 sich zur linken Seite des Mähdreschers 10 verschiebt, was dazu führt, dass sich das obere Ende des Arms 56 mit dem Ende 54 verschiebt. Die Welle 58 verschwenkt mit dem Arm 56, was dazu führt, dass das schwenkbare Element 60 um die durch die Welle 58 definierte Achse verschwenkt. Das obere Ende 62 des schwenkbaren Elements 60 wird sich zur linken Seite des Mähdreschers 10 verschieben, und das untere Ende 64 des schwenkbaren Elements 60 wird sich zur rechten Seite des Mähdreschers 10 verschieben. Diese Bewegung des schwenkbaren Elements 60 verschiebt die Verbindungselemente 68 und die Stifte 20 nach außen. Die Stifte 20 verschieben sich dabei seitlich nach außen in die Öffnungen 24, die im Erntevorsatz 12 definiert sind. Wenn die Stifte 20 in dieser Weise innerhalb der Öffnungen 24 positioniert sind, ist der Erntevorsatz 12 für den Erntebetrieb sicher an der Vorderseite des Schrägförderers 18 des Mähdreschers 10 befestigt.

Der Bediener kann auch die Erntevorsätze 12 wechseln, um den Erntebetrieb mit unterschiedlichen Erntegutarten durchzuführen. Dazu muss der Bediener den jeweils am Mähdrescher 10 befestigten Erntevorsatz entfernen. Der Bediener steht zunächst an der linken Seite des Schrägförderers 18 und drückt den Hebel 34 von sich fort. Dadurch verschwenken die Haken 36 nach oben und geben die Dorne 40 frei. Die erntevorsatzseitige Hälfte 38 der Mehrfachkupplung 28 kann dann von der mähdrescherseitigen Hälfte 26 der Mehrfachkupplung 28 entfernt werden, was die hydraulischen und elektrischen Leitungen vom Mähdrescher 10 betriebsmäßig von denen des Erntevorsatzes 12 trennt. Wenn der Hebel 34 in Richtung auf die Mitte des Schrägförderers 18 verschoben wird, wird das obere Ende des Kabels 44 innerhalb seiner Umhüllung 50 nach unten gedrückt. Das bedingt, dass das untere Ende des Kabels 44 in Richtung auf die rechte Seite des Mähdreschers 10 gedrückt wird, was den oberen Abschnitt des Arms 56 ebenfalls in diese Richtung verschiebt. Das verschwenkt die Welle 58, so dass das obere Ende 62 des schwenkbaren Elements 60 zur rechten Seite des Mähdreschers 10 verschwenkt und das untere Ende 64 des schwenkbaren Elements 60 in Richtung auf die linke Seite des Mähdreschers 10 verschwenkt. Dadurch werden wiederum die Verbindungselemente 68 und die Stifte 20 nach innen in Richtung auf die Mittellinie des Schrägförderers 18 gezogen. Wenn die Stifte 20 nach innen gezogen werden, werden sie aus den Öffnungen 24 im Erntevorsatz 12 herausgezogen, wodurch ein Freiraum für den Erntevorsatz 12 zur Abnahme von der Vorderseite des Schrägförderers 18 bereitgestellt wird. Der Bediener klettert dann in die Kabine und nutzt die Steuerungen in der Kabine dazu, die Vorderseite des Schrägförderers 18 abzusenken, bis die Halterungselemente 16 vom Träger 14 frei kommen. Der Bediener kann dann den Mähdrescher 10 rückwärts vom Erntevorsatz 12 wegfahren und den Mähdrescher 10 zu einem anderen Erntevorsatz fahren, der am Mähdrescher 10 anzubringen ist. Analog kann der Erntevorsatz auf einem Transportwagen abgelegt und nach einer Transportfahrt wieder am Mähdrescher befestigt werden.

Durch das Verbinden des Verriegelungsmechanismus 22 mit dem Hebel 34 der Mehrfachkupplung 28 stellt die vorliegende Erfindung einen Mechanismus bereit, der den Vorgang des Anbringens der hydraulischen und elektrischen Leitungen mit dem Vorgang des physischen Verriegelns des Erntevorsatzes 12 am Schrägförderer 18 des Mähdreschers 10 kombiniert. Wenn der Bediener den Hebel 34 zu sich hin zieht, werden die beiden Hälften 26 und 38 der Mehrfachkupplung 28 zusammengebracht und der Verriegelungsmechanismus 22 verriegelt selbsttätig den Erntevorsatz 12 an der Vorderseite des Schrägförderers 18. Das Zug und Druck übertragende Kabel 44 des Verriegelungsmechanismus 22 ist mit dem Hebel 34 der Mehrfachkupplung 28 gekoppelt und dient dazu, den Verriegelungsmechanismus 22 betriebsmäßig mit der Mehrfachkupplung 28 zu koppeln, um den Verriegelungsmechanismus 22 automatisch zwischen verriegelten und unverriegelten Positionen zu verschieben, wenn der Mehrfachkuppler 28 zwischen der Verbindungsposition und der Trennungsposition verschoben wird. Die vorliegende Erfindung vereinfacht die Wechselvorgänge, was eine entsprechende Verminderung der zum Anbringen und Abnehmen eines Erntevorsatzes 12 erforderlichen Zeit zum Ergebnis hat. Die zum Durchführen von Erntevorsatzwechselvorgängen erforderliche Zeit ist im Ergebnis vermindert.

## Patentansprüche

1. Kombination aus einem Mähdrescher (10), einem Erntevorsatz (12) sowie einer Einrichtung zur Anbringung des Erntevorsatzes (12) an dem Mähdrescher (10), welche mit einer Mehrfachkupplung (28), die eingerichtet ist, in einer Verbindungsposition Leitungen (32) des Mähdreschers (12) mit Leitungen (42) des Erntevorsatzes (12) zu verbinden und diese in einer Trennungsposition zu trennen, und mit einem Verriegelungsmechanismus (22) ausgerüstet ist, der betreibbar ist, den Erntevorsatz (12) mechanisch mit dem Mähdrescher (10) zu kuppeln, wobei im angekoppelten Zustand ein an dem oberen rückwärtigen Abschnitt des Erntevorsatzes (12) angeordneter Träger (14) durch ein Paar von Halterungselementen (16) abgestützt wird, die an dem oberen Vorderbereich eines vom Mähdrescher (10) gehalterten Schrägförderers (18) angebracht sind und der Verriegelungsmechanismus (22) mit der Mehrfachkupplung (28) gekoppelt ist und sich selbsttätig zwischen einer Verriegelungsposition und einer Entriegelungsposition bewegt, wenn die Mehrfachkupplung (28) zwischen der Verbindungsposition und der Trennungsposition bewegt wird, **dadurch gekennzeichnet,**
**dass** die Mehrfachkupplung (28) einen bedienerbetätigbaren Hebel (34) aufweist, der in eine Position verbringbar ist, in der er zwei Hälften (26, 38) der Mehrfachkupplung in der Verbindungsposition aneinander verriegelt,
und **dass** der Verriegelungsmechanismus (22) mit dem Hebel (34) gekoppelt ist, so dass der Verriegelungsmechanismus (22) sich selbsttätig zwischen der Verriegelungsposition und der Entriegelungsposition bewegt, wenn der Hebel (34) zwischen der Verbindungsposition und der Trennungsposition bewegt wird.

2. Kombination nach Anspruch 1, **dadurch gekennzeichnet, dass** der Verriegelungsmechanismus (22) über ein Zug und Druck übertragendes Kabel (44) mit dem Hebel (34) verbunden ist.

## Claims

1. A combination of a combine harvester (10), a harvesting header (12) and a device for fitting the harvesting header (12) on the combine harvester (10), which device is equipped with a multiple coupling (28) which is arranged in a connecting position to connect lines (32) of the combine harvester (12) to lines (42) of the harvesting header (12) and to separate them in a separation position, and with a latch mechanism (22) which is operable to couple the harvesting header (12) mechanically to the combine harvester (10), wherein in the coupled-up state, a support (14) arranged on the upper, rear section of the harvesting header (12) is supported by a pair of retaining elements (16) which are fitted on the upper front region of an inclined conveyor (18) retained by the combine harvester (10), and the latch mechanism (22) is coupled to the multiple coupling (28) and is moved automatically between a latched position and an unlatched position when the multiple coupling (28) is moved between the connecting position and the separation position, **characterised in that** the multiple coupling (28) comprises a lever (34) operable by the operator which can be brought into a position in which it latches together two halves (26, 38) of the multiple coupling in the connecting position, and **in that** the latch mechanism (22) is coupled to the lever (34) so that the latch mechanism (22) moves automatically between the latched position and the unlatched position when the lever (34) is moved between the connecting position and the separation position.

2. A combination according to claim 1, **characterised in that** the latch mechanism (22) is connected to the lever (34) by a cable (44) transmitting pull and push.

## Revendications

1. Combinaison formée par une moissonneuse-batteuse (10), un outil de récolte frontal (12), ainsi qu'un dispositif de montage de l'outil de récolte frontal (12) sur la moissonneuse-batteuse (10), lequel dispositif est équipé d'un couplage multiple (28) qui est conçu pour relier dans une position de liaison des conduites (32) de la moissonneuse-batteuse (10) avec des conduites (42) de l'outil de récolte frontal (12) et pour séparer celles-ci dans une position de séparation, et est équipé d'un mécanisme de verrouillage (22) qui peut être utilisé pour coupler mécaniquement l'outil de récolte frontal (12) avec la moissonneuse-batteuse (10), sachant que, dans la position couplée, un support (14), disposé dans la partie arrière supérieure de l'outil de récolte frontal (12), est supporté par une paire d'éléments de retenue (16) qui sont montés dans la zone supérieure avant d'un convoyeur incliné (18) supporté par la moissonneuse-batteuse (10), et le mécanisme de verrouillage (22) est couplé avec le couplage multiple (28) et se déplace automatiquement entre une position de verrouillage et une position de déverrouillage, lorsque le couplage multiple (28) se déplace entre la position de liaison et la position de séparation, **caractérisée en ce que** le couplage multiple (28) comporte un levier (34), destiné à être actionné par la personne de service, lequel peut être amené dans une position, dans laquelle il verrouille l'une contre l'autre deux moitiés (26, 38) du couplage multiple dans la position de liaison, et **en ce que** le mécanisme de verrouillage (22) est couplé avec le levier (34), de telle sorte que le mécanisme de verrouillage (22) se déplace automatiquement entre la position de verrouillage et la position de déverrouillage lorsque le levier (34) est déplacé entre la position de liaison et la position de séparation.

2. Combinaison selon la revendication 1, **caractérisée en ce que** le mécanisme de verrouillage (22) est relié au levier (34) par l'intermédiaire d'un câble (44) transmettant des forces de traction et de pression.
